(19) Europäisches Patentamt

European Patent Office

Office européen des brevets

(11) Veröffentlichungsnummer: **0 312 033**

**A2**

(12) **EUROPÄISCHE PATENTANMELDUNG**

(21) Anmeldenummer: **88116966.8**

(22) Anmeldetag: **12.10.88**

(51) Int. Cl.⁴: **F02M 25/06**

(30) Priorität: **12.10.87 DE 3734470**

(43) Veröffentlichungstag der Anmeldung:
**19.04.89 Patentblatt 89/16**

(84) Benannte Vertragsstaaten:
**AT BE CH DE ES FR GB GR IT LI LU NL SE**

(71) Anmelder: **Oberland Mangold GmbH**
**Amselstrasse 4**
**D-8100 Garmisch-Partenkirchen(DE)**

(72) Erfinder: **Mangold, Anton**
**Amselstrasse 4**
**D-8100 Garmisch-Partenkirchen(DE)**

(74) Vertreter: **Weber, Otto Ernst, Dipl.-Phys. et al**
**Hofbrunnstrasse 36**
**D-8000 München 71(DE)**

(54) **Abgasrückführung an einem Dieselmotor.**

(57) Es wird eine Vorrichtung zur Temperaturerhöhung des Abgases eines Dieselmotors beschrieben,
welche den Zweck hat, die Verbrennung der im
Abgas enthaltenen Rußpartikeln in einer motornahen
Abgasanlage zu unterstützen. Den Ansaugstutzen
des Dieselmotors wird über ein durchflußkonstantes
Zwei-Wege-Ventil ein Abgas-/Luftgemisch zugeführt.
Das Abgas ist über ein Rückführungsrohr aus einem
Abgasrohr abgezweigt. Die Steuerung des Zwei-
Wege-Ventils kann drehzahl-und/oder temperaturabhängig erfolgen. Insbesondere in der Startphase, im
Leerlauf und im Schubbetrieb wird der Abgasanteil
unter entsprechender Reduzierung des Luftanteils
erhöht, so daß die Temperatur des Gasgemisches
durch den Abgasanteil relativ hoch ist. Im Voll-Lastbetrieb erfolgt eine gegenläufige Regelung.

EP 0 312 033 A2

## Abgasrückführung an einem Dieselmotor

Die Erfindung betrifft eine Abgasrückführung an einem Dieselmotor mit einer Luftansaugung.

Bekanntlich sind neben gasförmigen Komponenten, wie Kohlenmonoxid. Kohlenwasserstoffverbindungen und Stickoxiden in den Abgasen von Dieselmotoren auch Partikeln enthalten, die im wesentlichen aus Kohlenstoff, Kohlenstoffwasserverbindungen und Schwefelverbindungen bestehen. Aus Umweltschutzgründen ist man bestrebt, einen möglichst hohen Anteil der im Abgasstrom enthaltenen Partikeln zurückzuhalten bzw. durch eine Nachverbrennung zu entsorgen.

Bei einer ausreichend hohen Temperatur der Abgase kann dies durch Selbstentzündung erfolgen. Die Selbstentzündungstemperatur der Partikelbeladung liegt im Bereich von etwa 500 bis 600 °C. Unter günstigen Bedingungen kann ein Abbrand bei tieferen Temperaturen erreicht werden, wenn die Abgase über einen Filter mit katalytischer Beschichtung geführt werden.

Diese Temperaturen werden jedoch üblicherweise nur im Volllastbereich oder bei maximaler Motordrehzahl erreicht. Im unteren und mittleren Motordrehzahlbereich liegen die Abgastemperaturen jedoch üblicherweise darunter, so daß eine Rußpartikel-Verbrennung nicht erfolgen kann. Auch im Schubbetrieb, der bei Stadtfahrten besonders häufig ist, bleiben die Abgase unterhalb der Selbstentzündungstemperatur.

Der Erfindung liegt die Aufgabe zugrunde, eine Abgasrückführung der eingangs genannten Art anzugeben, die in den kritischen Betriebszuständen des Dieselmotors eine optimale Abgas-Temperaturerhöhung gestattet.

Diese Aufgabe wird dadurch gelöst, daß die Luftansaugung und die Abgasrückführung über ein Zwei-Weg-Ventil mit konstantem Durchfluß erfolgt.

Die Erfindung hat den Vorteil, daß im niederen Drehzahlbereich, im Schubbetrieb und so fort bereits erwärmtes Abgas vom Motor angesaugt wird, während in gleichem Maße kühle Frischluft zurückgeregelt wird, so daß durch diese Rückkopplung des Abgases die Motor- und Abgastemperatur insgesamt erhöht wird. Auf diese Weise wird derjenige Temperaturbereich, im welchem die Rußparktikeln zündbereit sind, früher erreicht, so daß eine vollständigere Verbrennung der Rußpartikeln erfolgen kann. Die Erfindung eignet sich auch sehr gut für den Einsatz bei Turboladern.

Eine bevorzugte Weiterbildung der Erfindung besteht darin daß das Zwei-Wege-Ventil in Abhängigkeit von der Stellung der die Motordrehzahl bestimmenden Drosselklappen gesteuert ist. Diese Maßnahme hat den Vorteil, daß bei Teillast oder Leerlauf, wenn verstärkte Rußbildung beim Dieselmotor auftritt, die Temperatur der Kohlenstoffpartikeln zur Unterstützung des Abbrandes erhöht wird.

Eine andere Weiterbildung besteht darin, daß das Zwei-Wege-Ventil temperaturgesteuert ist, und daß die Temperatur im rückgeführten Abgas gemessen wird.

Auf diese Weise erhält man einen Regelkreislauf, der bei unteren und mittleren Motordrehzahl-Bereichen, d.h. bei niedrigen Motortemperaturen, aktiv wird.

Es ist hierbei zweckmäßig, daß eine maximale Abgastemperatur vorgegeben ist, und daß das Zwei-Wege-Ventil so gesteuert ist, daß bei dieser Abgastemperatur ein vorgegebener Durchfluß des Abgasanteils nicht überschritten wird. Durch diese Maßnahme wird verhindert, daß die Temperatur des Abgas-/Luftgemisches, welches dem Dieselmotor zugeführt wird, sich durch die Rückkopplung nicht in der Weise aufheizt, daß der Motor überhitzt wird.

Die drehzahlabhängige Regelung des Zwei-Wege-Ventils wird bevorzugt dadurch realisiert, daß der Steuereingang des Zwei-Wege-Ventils mit dem sogen. Gaspedal gekoppelt ist. Mit zunehmendem Durchtreten des Gaspedals wird der Abgasanteil zugunsten des Luftanteils zurückgeregelt. Es erweist sich als besonders einfach, daß die Kopplung mechanisch über ein Gestänge oder einen Seilzug ausgebildet ist.

Grundsätzlich dürfte ein Zwei-Wege-Ventil ausreichen. In besonderen Anwendungsfällen kann es jedoch auch zweckmäßig sein, daß stattdessen ein Drei-Wege-Ventil mit konstantem Durchfluß vorhanden ist, über welches zusätzlich ein Abgaskondensat-Anteil beigemischt werden kann.

Eine besondere Ausgestaltung des Zwei-Wege-Ventils kann darin bestehen, daß ein gesteuertes Ventil in der Abgasrückführung und ein weiteres gesteuertes Ventil in der Luftzuführung angeordnet ist, und daß die Steuereingänge der Ventile miteinander gekoppelt sind.

Um bei dieser Variante den konstanten Durchfluß auf einfache Weise zu gewährleisten, ist es zweckmäßig, daß die Abgasrückführung und die Luftzuführung jeweils über ein Rohr mit gleichem Querschnitt erfolgt, und daß die Ventile gegenphasig angesteuert werden.

Es kann sich ferner als vorteilhaft erweisen, daß ein erster Luftansaugpunkt in Fahrtrichtung vor dem Motor und daß ein zweiter Luftansaugpunkt in Fahrtrichtung nach dem Motor angeordnet ist, und daß ferner eine temperaturgesteuerte Umschaltung zwischen den beiden Luftansaugpunkten vorhanden ist. Über den ersten Luftansaugpunkt kann unmittelbar aus der Umgebung Frischluft angesaugt werden, deren Temperatur von der Motortemperatur unbeeinflußt ist. Dagegen ist die über den zweiten Luftansaugpunkt erhaltene Luft bereits temperiert, da sie bei Motorbetrieb am warmen Motorblock entlanggeleitet ist. Auf diese Weise wird eine Temperaturerhöhung des dem Motor zugeführten Abgas-/Luftgemisches nicht nur durch die Temperatur des Abgases, sondern auch durch den vorerwärmten Luftanteil gesteigert.

Es ist besonders günstig, daß die Abgasrückführung stromabwärts nach einem Reinigungsfilter erfolgt, so daß keine Partikeln in den Motor zurückgeführt werden.

Diese kann auf einfache Weise dadurch erfolgen, daß die Abgasrückführung nach einer motornahen Regenerationseinrichtung erfolgt.

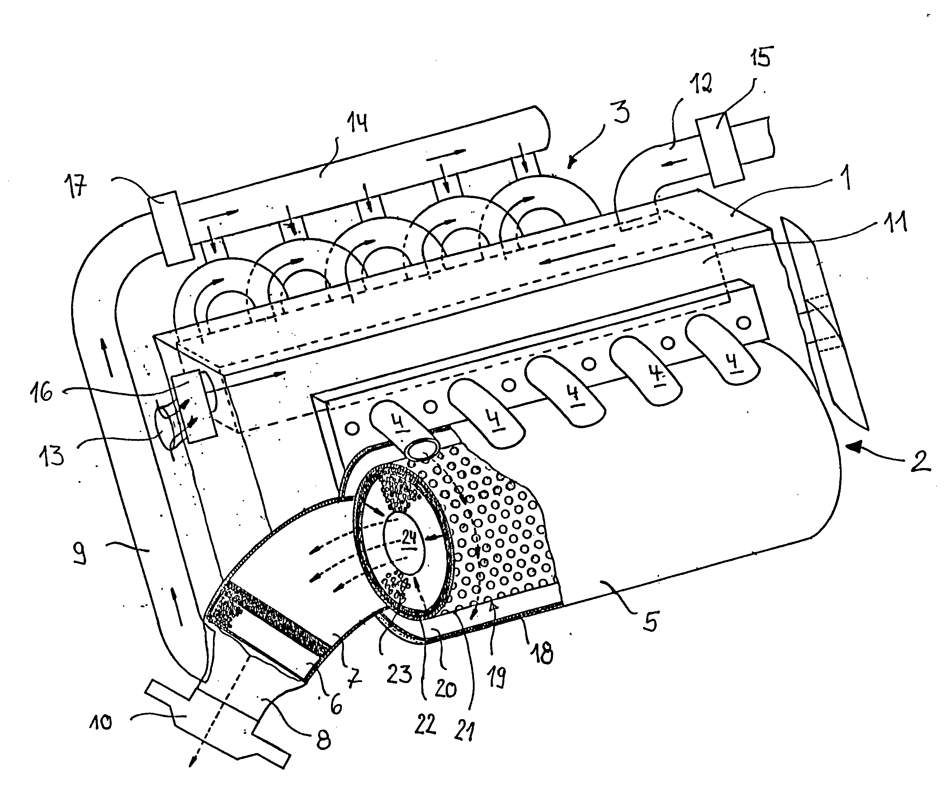

Nachfolgend wird die Erfindung anhand eines in der Figur dargestellten Ausführungsbeispiels weiter beschrieben.

Die Figur zeigt in perspektivischer Ansicht schematisch einen Dieselmotor mit einer Abgasanlage und einer Abgasrückführung.

Der in der Figur veranschaulichte Dieselmotor umfaßt einen schematisch dargestellten Motorblock 1, welcher ausgangsseitig mit einer Abgasanlage 2 und eingangsseitig mit Ansaugstutzen 3 zum Ansaugen eines Luft-/Abgasgemisches versehen ist. Um die Darstellung übersichtlich zu halten, wurde darauf verzichtet, Einzelheiten des Motorblocks 1 und insbesondere einer Dieselzuführung und -Verteilung darzustellen.

Die Abgasanlage 2 besteht in dem hier gezeigten Beispiel aus fünf Austrittsstutzen 4, die auch als Krümmer bezeichnet werden können, über welche Abgas aus den einzelnen, nicht dargestellten Zylindern in eine Einrichtung 5 zur Rußverbrennung und Abgasreinigung geleitet wird. Von dort gelangt das Abgas über einen Reinigungsfilter 6 in einem Abgasrohr 7 an eine Abzweigung 8, an welche einerseits ein Abgasrückführungsrohr 9 und andererseits ein Flansch 10 zur Verbindung mit einer nicht dargestellten Auspuffanlage angeschlossen ist.

Die fünf Ansaugsstutzen 3 sind einerseits über einen Luftfilter 11, der schematisch als gestrichelter Block dargestellt ist, mit einem ersten und zweiten Luftansaugstutzen 12, 13 und andererseits mit einem Abgasverteiler 14 verbunden, so daß in den Ansaugstutzen 3 eine Mischung der angesaugten Luft und des zugeführten Abgases stattfindet.

Im ersten und zweiten Luftansaugsstutzen 13 ist ein erstes bzw. zweites gesteuertes Ventil 15, 16 angeordnet. Ein drittes gesteuertes Ventil 17 befindet sich im Abgasrückführungsrohr 9. Das erste und zweite Ventil 15, 16 wird alternativ angesteuert, wie nachfolgend noch im einzelnen beschrieben wird. Zur Vereinfachung der Beschreibung wird daher zunächst beispielhaft auf das erste Ventil 15 Bezug genommen, wobei die in diesem Zusammenhang beschriebenen Einzelheiten sinngemäß auf das zweite Ventil 16 zutreffen.

Das erste Ventil 15 und das dritte Ventil 17 sind in der Weise ausgebildet, daß sie ein Zwei-Wege-Ventil mit konstantem Durchfluß bilden. Ein Öffnen oder Schließen des ersten Ventils 15 hat daher eine entsprechende gegensinnige Wirkung des dritten Ventils 17 zur Folge.

Eine Realisierung des Zwei-Wege-Ventils kann dadurch erfolgen, daß das Abgasrückführungsrohr 9 und der erste Luftansaugstutzen 12 bzw. die wirksamen Querschnitt der beiden Ventile gleichen Durchmesser aufweisen, daß das erste und dritte Ventil 15, 17 jeweils über eine Drosselklappe gesteuert werden, und daß die beiden Drosselklappen gegensinnig gekoppelt sind.

Die Ansteuerung des ersten und dritten Ventils 15, 17 erfolgt mechanisch über eine Hebel- und/oder Seilzug-Mimik (nicht dargestellt) in Abhängigkeit von der Stellung der Drosselklappe, über welche die Motordrehzahl bestimmt wird. Dies wird auf einfache Weise durch Verbindung der Hebel- und/oder Seilzug-Mimik mit einem Gaspedal (nicht dargestellt) erreicht, mit welchem die Kraftstoffzuführung bzw. die Drosselklappe gesteuert wird.

Alternativ dazu kann das erste und zweite Ventil auch in Abhängigkeit von der Abgastemperatur im Abgasrückführungsrohr 9 gesteuert werden.

Bei der drehzahlabhängigen Steuerung wird mit abnehmender Drehzahl das erste Ventil 15 geschlossen und das dritte Ventil 17 geöffnet. Umgekehrt wird mit zunehmender Drehzahl das erste Ventil 15 geöffnet und das dritte Ventil 17 geschlossen Typischerweise ist beim Start des Motors, im Leerlauf oder beim Schubbetrieb der Durchfluß im ersten Ventil 15 zu etwa 80% und im dritten Ventil 17 entsprechend etwa 20% gedrosselt. In diesem Betriebszustand wird dem Motor also ein Abgas-/Luftgemisch von 80:20 über die Ansaugstutzen 3 zugeführt.

Im Voll-Lastbetrieb kann das Abgas-/Luftgemisch typischerweise 20:80 sein.

Durch die geregelte Rückführung des Abgases wird eine höhere Abgastemperatur an den Austrittsstutzen 4 und in der Abgasanlage 2 erreicht. Auf diese Weise wird das Abbrennen von Rußpartikeln in der Einrichtung 5 unterstützt, da die Abgastemperaturen bis zur Selbstentzündungstemperatur der im Abgas enthaltenen Rußpartikeln gesteigert werden kann. Die Zündungsbereitschaft kann auch durch eine katalytische Beschichtung in der Regenerationseinrichtung 5 erhöht werden.

In der beispielhaft dargestellten Einrichtung 5 wird die Verbrennung der Rußpartikeln durch folgenden, durch einen Teilanschnitt eines äußeren Gehäusezylinders 18 sichtbaren, konstruktiven Aufbau erreicht. Die Austrittsstutzen 4 münden tangential in das Gehäuse 18, in welchem koaxial ein Hohlzylinder 19 unter Bildung eines Ringraums 20 zwischen dem Hohlzylinder 19 und dem Gehäuse 18 angeordnet ist. Der Hohlzylinder besteht aus einer Außenschicht aus einem Lochblech 21, einer darunter liegenden Zwischenschicht aus Drahtgestrick 22 und einer inneren Schicht aus einem porösen, katalytisch beschichteten Material 23. Nach dem Austritt aus dem Austrittsstutzen 4 unter hoher Geschwindigkeit umströmt das Abgas den Hohlzylinder 19 im Ringraum 20, wobei sich die Rußpartikeln durch Reibung am Lochblech 21 aufheizen. Dabei erhält das Drahtgestrick 22 die zur Verbrennung erforderliche Temperatur. Die Verbrennung findet statt, wenn das die Partikeln enthaltende Abgas in radialer Richtung aus dem Ringraum 20 in einen zylinderischen Hohlraum 23, der vom katalytisch beschichteten Material 23 umgeben ist, gelangt. Das Abgas tritt aus dem Hohlraum 24 axial in das Abgasrohr 7 aus. Anstelle der beschriebenen Einrichtung 5 können grundsätzlich auch andere Vorrichtungen zur Rußverbrennung vorhanden sein.

Der Reinigungsfilter 6 ist ebenfalls schichtweise aufgebaut. In einem Einsatz aus Lochblech befindet sich eingangsseitig eine Schicht aus Drahtgestrick, an die sich stromab poröses, katalytisch beschichtetes Material anschließt.

Um eine Überhitzung des Motors durch die Abgasrückführung zu verhindern, ist ein Thermofühler im Abgasrückführungsrohr 9 vorhanden, der bei einer vorgegebenen Maximaltemperatur, die beispielsweise bei 300°C liegen kann, das Abgas-/Luftgemisch in der Weise regelt, daß eine weitere Temperaturerhöhung verhindert wird.

Ferner ist das erste Ventil 15 mit einem weitern Thermoregler beaufschlagt, der bei Unterschreiten einer bestimmten vorgegebenen Temperatur der angesaugten Luft das erste Ventil 15 schließt und das zweite Ventil 16 öffnet, welches dann die Funktion des ersten Ventils 15 übernimmt. Diese Umschaltung ist dann zweckmäßig, wenn der erste Luftansaugstutzen 12 in Fahrtrichtung vor dem Motorblock 1 angeordnet ist, so daß er Luft unmittelbar aus der Umgebung ansaugt, die bei niedrigen Außentemperaturen eine entsprechende Herabsetzung der Temperatur des Abgas-/Luftgemisches bewirkt. Dagegen ist der zweite Luftansaugstutzen 13 in Fahrtrichtung hinter dem Motorblock 1 angeordnet. Er kann daher nur Luft ansaugen, die sich bereits am Motorblock 1 aufgewärmt hat. Wenn also die Außentemperatur soweit absinkt, daß über unmittelbar angesaugte Luft die Temperatur des Abgas-/Luftgemisches nur relativ niedrig gehalten werden kann, kann durch Umschaltung auf das zweite Ventil 16 eine Temperaturerhöhung durch die vortemperierte Luft erreicht werden. Es dürfte aus dem Vorstehenden deutlich ge worden sein, daß der Betrieb der erfindungsgemäßen Vorrichtung aus mit dem zweiten Ventil 16 allein anstelle der Kombination von erstem und zweitem Ventil 15, 16 möglich ist, wenn der betreffende Dieselmotor von vorneherein die Luftansaugung in Fahrtrichtung hinter dem Motorblock 1 hat.

Nachfolgend wird die Funktion der Erfindung am Beispiel eines Leerlauf-Betriebs bei einer Außentemperatur beschrieben, die unterhalb desjenigen minimalen Grenzwerts liegt, bei dessen Unterschreitung eine Umschaltung vom ersten Ansaugpunkt (erster Luftansaugstutzen 12) auf den zweiten Luftansaugpunkt (zweiter Luftansaugstutzen 13) erfolgt. Es wird also bereits vortemperierte Luft angesaugt. Da im Leerlauf das Gespedal vollständig zurückgenommen ist, ist das zweite und dritte Ventil in der Weise gegenphasig angesteuert, daß ein maximaler Abgasanteil und ein minimaler Luftanteil in die Ansaugstutzen 13 geleitet werden. Das vom Motor angesaugte Abgas-/Luftgemisch ist daher relativ heiß, so daß das Abgas in den Austrittsstutzen 4 eine Temperatur aufweist, die beträchtlich höher ist als die Abgastemperatur bei Motoren ohne entsprechende Abgasrückführung. Zusammen mit der durch die Reibung am Lochblech 21 und am Drahtgestrick 22 erzeugte Temperaturerhöhung sowie durch die Erhöhung der Zündbereitschaft durch das katalytische Material 23 liegt die Temperatur im Bereich der Selbstentzündungstemperatur der im Abgas enthaltenen Rußpartikeln. Somit erfolgt eine selbsttätige Regeneration der Abgasanlage 2. Das katalytisch beschichtete Material 23 kann bevorzugt aus Schaumkeramik bestehen. Die Zündbereitschaft der Rußpartikeln wird noch weiter erhöht, wenn der Hohlzylinder 19 vollständig mit katalytischem Material beschichtet ist.

## Ansprüche

1. Abgasrückführung für eine Brennkraftmaschine, wobei ein Abgasrückführungsrohr (9) stromab von einer Drosselklappe (15) in eine Luftansaugung einmündet, und wobei ferner im Abgasrückführungsrohr (9) eine Drosselklappe (17) angeordnet ist, die gegensinnig mit der in der Luftsaugung angeordneten Drosselklappe (15) gekoppelt ist,
dadurch **gekennzeichnet,**
daß die im Abgasrückführungsrohr (9) angeordnete Drosselklappe (17) temperaturgesteuert ist, daß die Temperatur im rückgeführten Abgas gemessen wird, daß eine maximale Abgastemperatur vorgegeben ist, und daß die im Abgasrückführungsrohr (9) angeordnete Drosselklappe (17) so gesteuert ist, daß bei dieser vorgegebenen Abgastemperatur ein vorgegebener Durchfluß des Abgasanteils nicht überschritten wird.

2. Abgasrückführung nach Anspruch 1,
dadurch **gekennzeichnet,**
daß eine zusätzliche Zuführung von Abgaskondensat vorhanden ist, die in Abhängigkeit von den Drosselklappen (15,17) angesteuert wird.

3. Abgasrückführung nach Anspruch 1 oder 2,
dadurch **gekennzeichnet,**
daß eine weitere Luftzurüfhrung mit einer weiteren Drosselklappe (16) vorhanden ist, und daß diese mit den anderen Drosselklappen (15,17) gekoppelt ist.

4. Abgasrückführung nach Anspruch 3,
dadurch **gekennzeichnet,**
daß die Abgasrückführung und die Luftzuführung jeweils uber ein Rohr mit gleichem Querschnitt erfolgt und daß die erste bzw. zweite und die dritte Drosselklappe (15,16,17) gegenphasig angesteuert werden.

5. Abgasrückführung nach einem der vorhergehenden Ansprüche,
dadurch **gekennzeichnet,**
daß eine erster Luftansaugpunkt in Fahrtrichtung vor dem Motor und ein zweiter Luftansaugpunkt in Fahrtrichtung nach dem Motor angeordnet sind, und daß ferner eine temperaturgesteuerte Umschaltung zwischen den beiden Luftansaugpunkten vorhanden ist.

6. Abgasrückführung nach einem der vorhergehenden Ansprüche,
dadurch **gekennzeichnet,**
daß das Abgasrückführungsrohr (9) aus einem Abgasrohr (7) nach einem Reinigungsfilter (6) abgezweigt wird.

7. Abgasrückführung nach einem der vorhergehenden Ansprüche,
dadurch **gekennzeichnet,**
daß das Angasrückführungsrohr (9) nach einer motornahen Regenerationseinrichtung (5) aus dem Abgasrohr (7) abgezweigt wird.

8. Abgasrückführung nach einem der vorhergehenden Ansprüche,
dadurch **gekennzeichnet,**
daß die Drosselklappen (15,16,17) lastabhängig gesteuert sind.